**Europäisches Patentamt**

**European Patent Office**

**Office européen des brevets**

(19)

(11) Veröffentlichungsnummer: **0 157 319**
**B1**

(12) **EUROPÄISCHE PATENTSCHRIFT**

(45) Veröffentlichungstag der Patentschrift:
**20.07.88**

(21) Anmeldenummer: **85103434.8**

(22) Anmeldetag: **22.03.85**

(51) Int. Cl.⁴: **H 01 S 3/083**, H 01 S 3/139,
G 01 C 19/64

(54) **Ringlaser, insbesondere für Ringlaserkreisel.**

(30) Priorität: **31.03.84 DE 3412017**

(43) Veröffentlichungstag der Anmeldung:
**09.10.85 Patentblatt 85/41**

(45) Bekanntmachung des Hinweises auf die Patenterteilung:
**20.07.88 Patentblatt 88/29**

(84) Benannte Vertragsstaaten:
**DE FR GB**

(56) Entgegenhaltungen:
**EP-A-0 103 683**

(73) Patentinhaber: **Deutsche Forschungs- und Versuchsanstalt für Luft- und Raumfahrt e.V., Linder Höhe Postfach 90 60 58, D-5000 Köln 90 (DE)**

(72) Erfinder: **Rodloff, Rüdiger, Dr., Birkenring 15, D-3176 Meinersen (DE)**
Erfinder: **Jungbluth, Werner, Hermann- Hesse-Strasse 13, D-3308 Königslutter (DE)**

(74) Vertreter: **Gralfs, Harro, Dipl.- Ing., Am Bürgerpark 8, D-3300 Braunschweig (DE)**

EP 0 157 319 B1

**Beschreibung**

Die Erfindung bezieht sich auf einen Ringlaser nach dem Oberbegriff des Patentanspruches 1.

Die Positionierung der Eckspiegel in einem Ringlaser, an denen die umlaufenden Wellenzüge des Strahls umgelenkt werden, stellt ein besonderes Problem dar. Die Eckspiegel müssen mit einer Genauigkeit von Bruchteilen einer Bogensekunde zueinander ausgerichtet sein, um sicherzustellen, daß der Strahl genau in der Achse des Verstärkermediums verläuft. Bei Ringlasern müssen deshalb die Spiegelanschlagflächen am zentralen Resonatorblock mit hoher Präzision gefertigt werden. Trotzdem werden gewisse Restfehler bei der Spiegelausrichtung unvermeidbar bleiben. Eine weitere Fehlerquelle liegt in den Änderungen der Geometrie des Ringlasers im Betrieb, sei es durch Temperaturänderungen, sei es durch mechanische Einwirkungen.

Zur Kompensation des Strahlversatzes in der Strahlebene ist bei einem bekannten Ringlaser der gattungsgemäßen Art einer der Eckspiegel um seine senkrecht zur Strahlebene liegende Achse drehbar. Das vom Fotodetektor abgegebene Signal ist entsprechend der jeweiligen Fehlpositionierung des umlaufenden Strahles moduliert. Aus dem Signal wird unter Verwendung von gesonderten Referenzsignalen ein Stellsignal für den Stellantrieb des schwenkbaren Spiegels ermittelt und dem Stellantrieb zugeleitet. Diese Schaltung ist auf die Einhaltung eines Intensitätsmaximums ausgerichtet. Die entsprechende Kurve hat im Bereich des Maximums nur eine sehr geringe Steigung, so daß Fehler in der Spiegelpositionierung nur innerhalb des durch den Regler vorgegebenen Arbeitsbereiches kompensierbar sind. Die Regelung ist darüber hinaus mit einem erheblichen Aufwand verbunden (US-PS-4 113 387).

Es ist weiter bekannt, fertigungstechnisch und vor allem thermisch bedingte Fehlpositionierungen der Spiegel dadurch zu kompensieren bzw. zu verhindern, daß der gesamte Resonatorblock verbogen wird. Das Problem dieses Verfahrens liegt darin, daß dabei nicht nur die Spiegel verdreht werden, sondern auch die Gasentladungskanäle innerhalb des Trägerblocks verbogen werden, wodurch sich der Einfluß der Plasmaströmung auf die Lichtwellenzüge ändert und zusätzliche Drifteffekte erzeugt werden. Bei diesem bekannten Ringlaser wird als charakteristischer Meßwert die Ausgangsleistung des Ringlasers gemessen und in einem nachgeschalteten Regelkreis werden die Stellgrößen für die Piezobiegeelemente bestimmt, mit denen der Resonatorblock verbogen wird. Der Nachteil besteht hier neben den geometrischen Problemen darin, daß der Regelkreis relativ aufwendig ist. So muß die Ausgangsleistung differenziert werden, um eine Information über das Vorzeichen der Stellgrößen zu erhalten. Auch hier findet der Regler wiederum nur ein relatives Maximum der Ausgangsleistung (DE-OS-3 143 798).

Es ist weiter bekannt, bei einem Drehgeschwindigkeitssensor Fotodetektoren vorzusehen, mit denen die Intensität der ausgekoppelten Strahlanteile der beiden gegenläufigen Wellenzüge gemessen wird. Die Signale werden einem Summierer aufgegeben. Das Summensignal wird dann über einen Hochspannungsverstärker aufgegeben, von dem ein Stellsignal für einen Stellantrieb eines der Eckspiegel abgegeben wird, mit dem eine Translationsbewegung zur Konstanthaltung der Resonanzraumlänge durchgeführt wird (DE-OS-3 009 796).

Aufgabe der Erfindung ist es, einen Ringlaser der gattungsgemäßen Art so auszubilden, daß mit relativ einfachen Mitteln eine weitgehende Optimierung der Resonatorgeometrie erreichbar ist, und zwar sowohl bei fertigungstechnisch als auch thermisch bedingten Fehlpositionierungen der Spiegel.

Diese Aufgabe wird gemäß der Erfindung dadurch gelöst, daß als Fotodetektor wenigstens eine Fotodiode vorgesehen ist, die so angeordnet ist, daß sie ein der Strahllage proportionales Signal abgibt, in Abhängigkeit von dem ein Stellsignal für den Stellantrieb des kippbaren Spiegels gebildet wird.

Zweckmäßige Ausgestaltungen der Erfindung sind Gegenstand der abhängigen Patentansprüche.

Die Erfindung ist in der Zeichnung beispielsweise veranschaulicht und im nachstehenden im einzelnen anhand der Zeichnung beschrieben.

| | |
|---|---|
| Fig. 1 | zeigt in Draufsicht das Prinzip der Ausbildung und Anordnung eines erfindungsgemäß ausgebildeten Ringlasers. |
| Fig. 2 | zeigt die Wirkung einer Kippbewegung eines der Spiegel um die senkrecht zur Strahlebene stehende Achse. |
| Fig. 3 | zeigt die Kompensation der Spiegeldrehung durch Verstellung des mit einem um die gleiche Achse wirksamen Kippantrieb versehenen weiteren Spiegels. |
| Fig. 4 | und 5 zeigen den Fig. 2 und 3 entsprechende Situationen, bei Kippen des Spiegels, über den der Strahlanteil ausgekoppelt wird. |
| Fig. 6 | zeigt das Entstehen eines durch Kippen eines der Eckspiegel um eine in der Strahlebene liegende Kippachse erzeugten Pyramidalfehlers. |
| Fig. 7 | zeigt eine Anordnung und Schaltung zur Kompensation eines Pyramidalfehlers mit einer durch den Pyramidalfehler verlagerten Strahlebene. |
| Fig. 8 | zeigt die Kompensation des Pyramidalfehlers nach Fig. 7. |

| Fig. 9 | zeigt eine Anordnung und Schaltung zur vollständigen Kompensation von Pyramidalfehlern. |
| Fig. 10 | zeigt eine Kurve mit dem erfindungsgemäß ermittelten Differenzsignal und der Strahlintensität über dem Pyramidalwinkel aufgetragen. |
| Fig. 11 | zeigt einen Stellantrieb, mit dem einem Spiegel eine Kippbewegung erteilt werden kann. |
| Fig. 12 | zeigt in Draufsicht die beiden Seiten einer Piezoscheibe, wie sie bei einem Stellantrieb nach Fig. 11 zur Durchführung einer Kippbewegung um eine Achse verwendet wird. |
| Fig. 13 | zeigt in Draufsicht eine weitere Ausführungsform einer Piezoscheibe für einen Stellantrieb mit zwei Kippachsen. |
| Fig. 14 | zeigt eine weitere Ausführungsform eines Stellantriebes. |
| Fig. 15 | zeigt eine Ausführungsform eines Eckspiegels eines Ringlasers mit einem Stellantrieb nach Fig. 11 bzw. 14. |

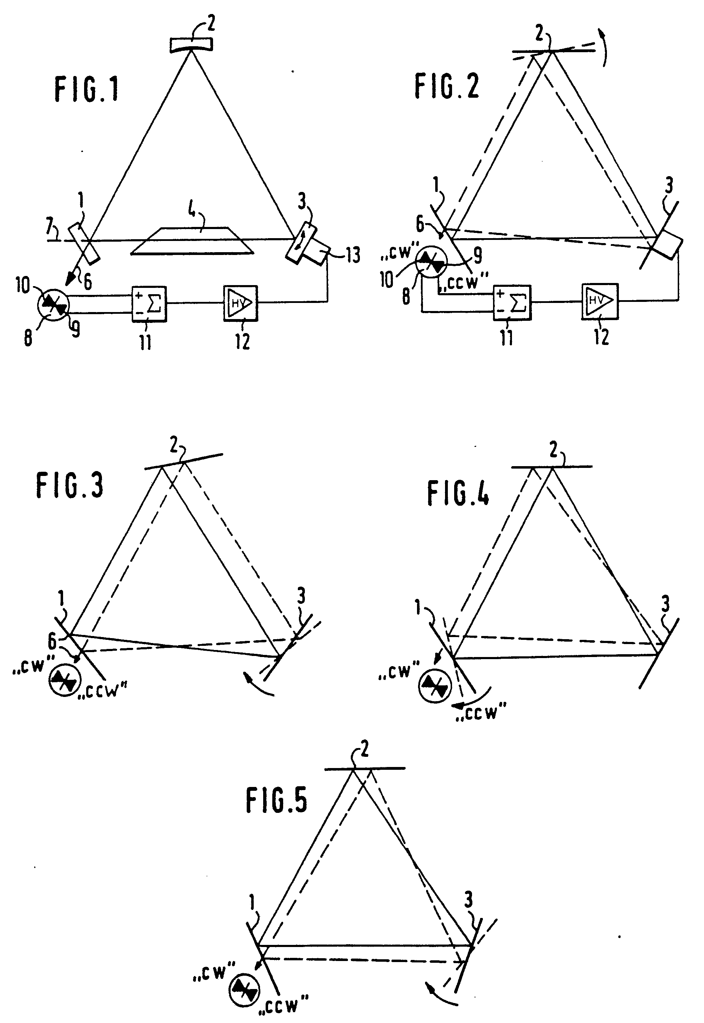

In Fig. 1 ist das Prinzip eines Ringlasers dargestellt, der drei Eckspiegel 1, 2 und 3, davon einen Hohlspiegel, und ein optisches Verstärkermedium oder Lasermedium 4 aufweist, das bei Ringlasern, die in Laserkreiseln verwendet werden, im allgemeinen eine He-Ne-Gasentladung ist. Innerhalb des durch die Spiegel vorgegebenen Dreiecks laufen gegensinnig zwei Lichtwellenzüge um, aus denen an einem der Spiegel - hier der Spiegel 1, der teildurchlässig ausgebildet ist, - Strahlanteile 6 und 7 ausgekoppelt werden. Im Weg des ausgekoppelten Strahlanteiles 6 ist eine Differentialfotodiode 8 mit den beiden Fotodioden 9 und 10 angeordnet, und zwar derart, daß bei optimaler Einstellung aller Komponenten der Lichtstrahl 6 genau auf die Mitte oder die Nullstellung der Differentialfotodiode auftrifft. Die beiden Fotodioden 9 und 10 sind auf einen Subtrahierer 11 geschaltet, dessen Ausgangssignal auf einen Hochspannungsverstärker 12 gegeben wird, von dem der Stellantrieb 13 angesteuert wird, über den der Spiegel 3 um seine senkrecht zur Strahlebene liegende Achse kippbar ist.

Bei der beschriebenen Anordnung werden bei optimaler Einstellung aller Komponenten von beiden Fotodioden 9 und 10 gleiche Ausgangssignale ausgebildet. Das Ausgangssignal des Subtrahierers 11 ist dann Null und der Stellantrieb 13 in Ruhe.

Wird, wie in Fig. 2 angedeutet, der Spiegel 2 entgegen dem Uhrzeigersinn in Pfeilrichtung gekippt in die gestrichelt dargestellte Stellung, wird der Strahl in die gleichfalls gestrichelt dargestellte Lage verschoben. Damit wird auch die Lage des ausgekoppelten Strahlanteiles 6 verschoben, so daß durch diesen dann lediglich noch die Fotodiode 10 der Differentialfotodiode 8 beaufschlagt wird. Von dieser Fotodiode wird damit ein Signal abgegeben, das hier als mit einem negativen Vorzeichen behaftetes Signal definiert ist. Da das von der Fotodiode 9 abgegebene positive Signal gleich Null ist, wird vom Subtrahierer ein dem von der Fotodiode 10 abgegebenen Signal proportionales Signal auf den Hochspannungsverstärker als mit einem Vorzeichen behaftetes Signal aufgegeben, von dem ein entsprechendes Stellsignal auf den Stellantrieb des Spiegels 3 aufgegeben wird. Der Spiegel 3 wird dabei in die in Fig. 3 gestrichelt dargestellte Lage gekippt bis der durch die Kippbewegung des Spiegels 2 erzeugte Strahlverlauf, der in Fig. 3 in voller Linie dargestellt ist, in die Ausgangsstellung zurückkehrt, die in Fig. 3 gestrichelt dargestellt ist. In dieser Stellung trifft der ausgekoppelte Strahlanteil 6 wieder mittig auf die Differentialfotodiode, so daß das Ausgangssignal des Summierers zu Null wird. Die beschriebene Anordnung arbeitet sehr einfach. Es findet eine direkte Steuerung des Stellantriebes 13 über die Differentialfotodiode in Abhängigkeit von der jeweils gegebenen Strahllage statt, d. h. der Lage des ausgekoppelten Strahlanteiles 6 relativ zur Differentialfotodiode 8. Diese Fotodiode kann beispielsweise auf der Rückseite des Spiegels 1 in einem vorgegebenen Abstand zur Spiegeloberfläche angeordnet sein.

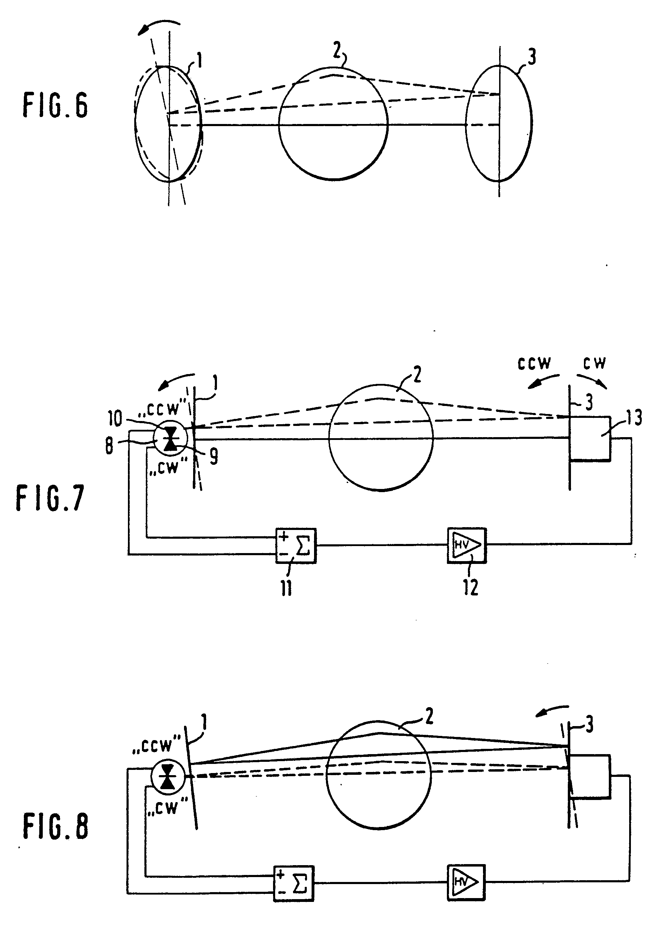

Fig. 4 zeigt eine Situation, bei der der Spiegel 1 um seine senkrecht zur Strahlebene liegende Achse entgegen dem Uhrzeigersinn in die gestrichelt dargestellte Lage gekippt ist. Diese Kippbewegung ist durch den Pfeil angedeutet. Der Strahl nimmt dann die gestrichelt dargestellte Lage ein. Beaufschlagt wird hier wiederum die Fotodiode 10 der Differentialfotodiode 8. In gleicher Weise wie vorstehend unter Bezug auf Fig. 2 und 3 beschrieben, wird ein Stellsignal erzeugt, über das der mit dem Stellantrieb versehene Spiegel 3 im Uhrzeigersinn - in Richtung des Pfeiles - gekippt wird und damit die ursprüngliche Lage des Strahlverlaufs - in Fig. 5 wieder gestrichelt dargestellt - annähernd wiederhergestellt ist.

Das im vorstehenden unter Bezug auf die Fig. 2 bis 5 beschriebene einfache Verfahren zur horizontalen Strahlstabilisierung erlaubt keine vollständige Korrektur des Strahlverlaufes. Diese Korrektur reicht aber vielfach aus, wenn die Strahlverschiebung durch thermische bzw. mechanische Verformungen des Trägerblocks nicht allzu groß sind.

In diesem Zusammenhang sei darauf hingewiesen, daß es sich bei den Darstellungen in den Fig. 2 bis 5 nicht um maßstäbliche Zeichnungen handelt. Es soll hier lediglich die Tendenz der Strahlverschiebungen und ihre Kompensation angedeutet werden.

Die Wirkung sei durch nachstehende Ausführungsbeispiele erläutert, bei denen ausgegangen wird von einer Resonatorraumlänge von 30 cm in Form eines gleichseitigen Dreiecks. Es wird jeweils der horizontale Strahlversatz angegeben, der sich bei einer Kippbewegung des Spiegels 1 um 1" um die senkrecht zur Strahlebene stehende Hochachse ergibt:

**Beispiel 1**
Krümmungsradius des Hohlspiegels 2: 1 m.
Strahlversatz:

| | | |
|---|---|---|
| | auf Spiegel 1 | -0,85 µm |
| | auf Spiegel 2 | 0,33 µm |
| | auf Spiegel 3 | 0,26 µm |

**Beispiel 2**
Krümmungsradius des Hohlspiegels: 5 m.
Strahlversatz:

| | | |
|---|---|---|
| | auf Spiegel 1 | -0,84 µm |
| | auf Spiegel 2 | 0,28 µm |
| | auf Spiegel 3 | 0,27 µm |

Für die Praxis sehr viel problematischer sind Kippbewegungen der Spiegel um die in der Strahlebene liegende horizontale Achse. Der hierbei auftretende Pyramidalfehler führt zu wesentlich größeren Verschiebungen des Strahlverlaufs in vertikaler Richtung, wie in den folgenden Beispielen belegt. Die Resonatorraumlänge beträgt wiederum 30 cm in Form eines gleichseitigen Dreiecks. Kippbewegung des Spiegels 1 um 1" um die im wesentlichen zur Strahlebene parallele Horizontalachse.

**Beispiel 3**
Krümmungsradius des Hohlspiegels: 1 m.
Vertikaler Strahlversatz:

| | | |
|---|---|---|
| | auf Spiegel 1 | 4,36 µm |
| | auf Spiegel 2 | 4,84 µm |
| | auf Spiegel 3 | 4,6 µm |

**Beispiel 4**
Krümmungsradius des Hohlspiegels: 5 m.
Vertikaler Strahlversatz:

| | | |
|---|---|---|
| | auf Spiegel 1 | 23,75 µm |
| | auf Spiegel 2 | 24,24 µm |
| | auf Spiegel 3 | 23,99 µm |

Aus den aufgeführten Beispielen ist zu entnehmen, daß der Strahlverlauf im Ringlaser in vertikaler Richtung sehr viel stärker durch Resonatorraumverformungen beeinflußt wird als in horizontaler Richtung.

Ein vertikaler Strahlversatz in der obengenannten Größenordnung beeinflußt den Laserkreisel in nachhaltiger Weise. Eine vertikale Verschiebung des Strahls im Lasermedium führt zu einer geringeren Verstärkung und damit einer Erhöhung der Verluste und ändert darüber hinaus den Einfluß der Plasmaströmung. Hieraus resultiert eine Änderung der Laserkreiseldrift.

In Fig. 6 ist in einer Frontansicht der normalen Strahlebene mit den drei Eckspiegeln 1, 2 und 3 der Strahlversatz dargestellt, der auftritt, wenn der Spiegel 1 um die Horizontalachse gekippt wird. Es zeigt sich, daß die Strahlebene, die in ihrer ursprünglichen Lage in voller Linie dargestellt ist, im wesentlichen parallel nach oben bzw. bei entgegengesetzter Kippbewegung des Spiegels nach unten verschoben wird.

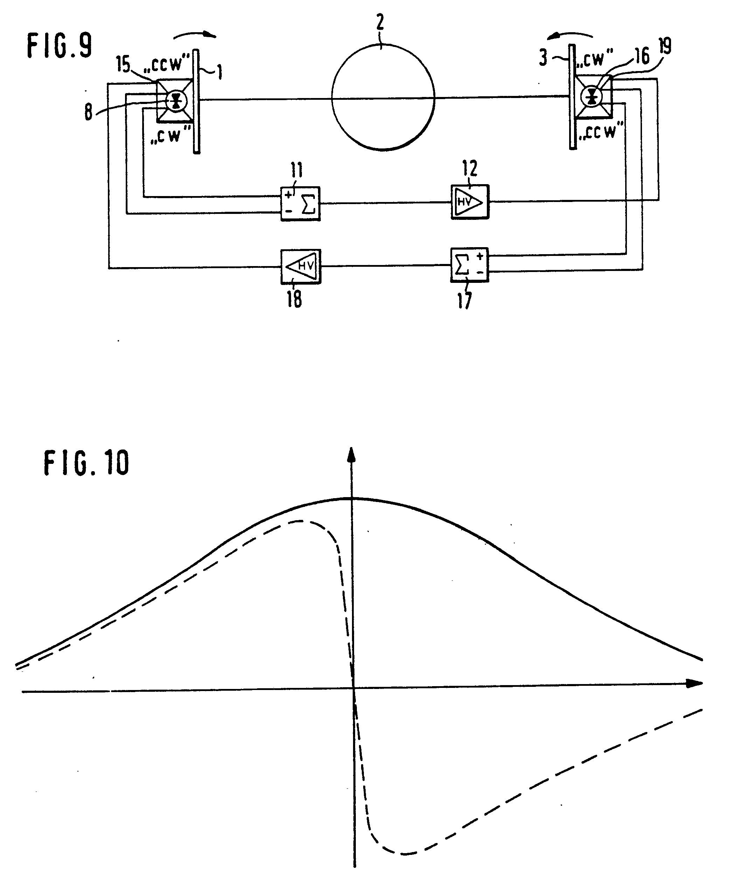

In Fig. 7 ist eine Anordnung beschrieben, mit der die Verschiebung der Strahlebene kompensierbar ist. Die Differentialphotodiode 8 ist hier gegenüber der Ausführung nach den Fig. 1 bis 5 um 90° gedreht angeordnet. Es ist hier wiederum in vollen Linien die Lage der Spiegel und der Strahlebene bei optimaler Ausrichtung der Spiegel wiedergegeben. Durch eine Kippbewegung des Spiegels 1 um seine horizontale Achse in Richtung des Pfeiles in die gestrichelt dargestellte Stellung verschiebt sich die Strahlebene in die gleichfalls gestrichelt dargestellte Lage. Der über den Spiegel 1 ausgekoppelte Strahlanteil; der in der ungestörten Lage mittig auf die Differentialfotodiode 8 auftrifft, wird nach oben verschoben und trifft auf die Fotodiode 10. Damit wird von dieser Fotodiode ein von der Lage des ausgekoppelten Strahlanteiles und damit der Lage der gestörten Strahlebene abhängiges Signal auf den Subtrahierer 11 gegeben. Von diesem wird ein entsprechendes Signal dem Hochspannungsverstärker 12 zugeleitet, von dem der Stellantrieb 13' sein Stellsignal erhält, mit dem der Spiegel 3 um die horizontale Achse gekippt wird, und zwar in Richtung des Pfeiles "ccw". Dadurch gelangt die Strahlebene aus der nach oben verschobenen Lage, die in Fig. 8 in vollen Linien dargestellt ist, im wesentlichen zurück in die ursprüngliche Ebene, obwohl, wie in Fig. 8 angedeutet, eine vollständige Wiederherstellung der ursprünglichen Lage noch nicht erreicht ist.

Durch Kompensation des vertikalen Strahlversatzes allein durch Kippen des automatisch gesteuerten Spiegels 3 um die horizontale Achse ergibt sich folgender nicht kompensierbarer vertikaler Strahlversatz:

| | |
|---|---|
| auf den Spiegel 1 | 0,0 µm |
| auf den Spiegel 2 | 0,24 µm |
| auf den Spiegel 3 | 0,47 µm. |

**Beispiel 5**

Die Resonatorraumlänge beträgt wiederum 30 cm in Form eines gleichseitigen Dreiecks. Krümmungsradius des Hohlspiegels: 5 m. Alle drei Eckspiegel sind um +0,5″ um die Horizontalachse gekippt.

Vertikaler Strahlversatz:

| | |
|---|---|
| auf Spiegel 1 | 35,9 μm |
| auf Spiegel 2 | 36,36 μm |
| auf Spiegel 3 | 35,9 μm. |

Dieser Vertikale Strahlversatz wird mit der Anordnung nach Fig. 7 und 8 durch Kippen des Spiegels 3 um die Horizontalachse um -1,5″ kompensiert. Nach der Korrektur ergibt sich ein vertikaler Strahlversatz:

| | |
|---|---|
| auf Spiegel 1 | 0,0 μm |
| auf Spiegel 2 | 0,0 μm |
| auf Spiegel 3 | 0,36 μm. |

Auch aus diesen Beispielen ergibt sich, daß mit der Anordnung nach den Fig. 7 und 8 der Pyramidalfehler zwar sehr weitgehend, aber nicht vollständig kompensierbar ist. Normalerweise bleibt ein nicht kompensierbarer Strahlversatz auf mindestens einem der Spiegel von einigen 0,1 μm zurück.

Eine vollständige Wiederherstellung der ursprünglichen Lage bei Auftreten eines Pyramidalfehlers ist erreichbar mit einer Anordnung, wie sie in Fig. 9 dargestellt ist. Hier ist zusätzlich zum Spiegel 3 auch der Spiegel 1 mit einem Stellantrieb 15 versehen, mit dem auch dieser Spiegel um seine in der Strahlebene liegende Kippachse kippbar ist. Hinter dem Spiegel 1 liegt wiederum die Differentialfotodiode 8, während hinter dem Spiegel 3 eine weitere Differentialfotodiode 16 angeordnet ist. Die beiden Dioden der Differentialfotodioden 8 und 16 sind jeweils auf Subtrahierer 11, 17 geschaltet, deren Ausgangssignal einen Hochspannungsverstärker 12 bzw. 18 beaufschlagt, wobei von dem Hochspannungsverstärker 18 das Stellsignal für den Stellantrieb 15 und von dem Hochspannungsverstärker 12 das Stellsignal für den Stellantrieb 19 abgegeben wird. Mit der Anordnung nach Fig. 9 ist eine vollständige Kompensation von Pyramidalfehlern möglich. Damit lassen sich auch die höchsten Anforderungen erfüllen, die an die Strahlstabilität gestellt werden. In der US-PS-4 113 387 ist beispielsweise angegeben, daß die Spiegel eine Winkelstabilität von 0,1 sec haben müssen, damit eine Kreiseldrift von 0,01°/h nicht überschritten wird. Ein solcher Strahlversatz ist so minimal, daß er durch eine Detektion der Änderung der Ausgangsleistung nicht mehr bestimmbar ist. Der Fehlereinfluß auf den Kreisel ergibt sich in diesem Fall aus der Änderung des Strahlverlaufs innerhalb der Plasmaströmung. Eine Intensitätsmessung liefert in diesem Fall keine relevanten Informationen über den zu erwartenden Kreiselfehler mehr. Gemäß der Erfindung, bei der der Strahlversatz direkt gemessen wird, ist dagegen auch die Detektion von Winkelfehlern der genannten Größenordnung und deren Kompensation möglich.

Der grundsätzliche Unterschied der Detektion von Winkelfehlern und deren Kompensation nach dem Stand der Technik und der vorliegenden Erfindung soll noch einmal unter Bezug auf Fig. 10 dargelegt werden.

Wenn an einem optimal justierten Ringlaser ein Pyramidalfehler erzeugt wird, ändert sich die Ausgangsleistung, gemessen als Strahlintensität. Deren Verlauf ist in Fig. 10 in voller Linie dargestellt. Bei den bekannten Verfahren (US-PS-4 113 387, DE-OS-3 143 798) wird zur Strahlstabilisierung die Ausgangsleistung optimiert. Diesem Weg sind Grenzen dadurch gesetzt, daß die Steigung der Kurve in der Umgebung des Optimums Null ist und in diesem Bereich Intensitätsdifferenzen nicht mehr meßbar sind. Die gleichen Fehler treten auf bei einem weiteren bekannten Verfahren (GB-PS-1 534 998), bei dem zur Strahloptimierung das relative Minimum der auf den ausgekoppelten Lichtstrahlen vorhandenen Modulation angestrebt wird.

In Fig. 10 ist ferner gestrichelt das Differenzsignal dargestellt, das in der oben beschriebenen Weise in Abhängigkeit vom Pyramidalfehler gewonnen wird, und zwar durch die beschriebene Messung des Strahlversatzes. Im Gegensatz zur Kurve für die Strahlintensität hat die Kurve für das Differenzsignal im Punkt der optimalen Strahljustierung die größte Steigung. Bei Versuchen mit einem Ringlaser mit konventionellen Abmessungen wurde als Steigung dieser Kurve an diesem Punkt 0,4 V/sec gemessen. Bei einem Signal-Rauschverhältnis der Optoelektronik von 20 dB kann damit ein Pyramidalfehler von 0,01″ bzw. ein Strahlversatz von 0,04 μm festgestellt und kompensiert werden.

Ein weiterer Vorteil der beschriebenen Anordnung liegt in ihrer hohen Temperaturstabilität. Bei Befestigung der Doppelfotodioden auf der Rückseite eines Ringlasereckspiegels wird die Position von der thermischen Bewegung dieses Spiegels beeinflußt. Bei einer Temperaturdifferenz von 10°C zwischen Spiegelmitte und Spiegelrand führt dies zu einer zu vernachlässigenden Verschiebung der Fotodioden von $1,25 \times 10^{-2}$ μm.

Nimmt man weiter an, daß die Befestigung der Differentialfotodioden die Positioniergenauigkeit zusätzlich um den Faktor 5 verschlechtert, liegt der dadurch verursachte Fehler immer noch im Bereich des oben angegebenen Auflösungsvermögens.

Durch Verwendung von zwei Differentialfotodioden mit Ausrichtung in der Ebene des Strahlenganges und senkrecht dazu können sowohl Pyramidalfehler als auch Winkelfehler festgestellt werden und über entsprechende Stellantriebe an den Spiegeln kompensiert werden. Besonders zweckmäßig ist hierfür die Verwendung einer 4-Quadranten-Differentialfotodiode, die den Strahlversatz in den genannten beiden Richtungen messen kann und den Vorteil hat, daß nur eine einzige solche Diode auf den optimalen Strahlverlauf eingestellt werden muß. Für wenigstens einen der Spiegel ist dann ein zweiachsiger Kippantrieb vorzusehen, um eine horizontale und vertikale Strahlstabilisierung zu erreichen. Mit einer solchen kombinierten Anordnung ist dann die vollständige Kompensation aller auftretenden Strahlversatzfehler möglich. Für wenigstens einen der Spiegel kann gegebenenfalls zusätzlich in üblicher Weise ein Stellantrieb zur Erzeugung einer Translationsbewegung zur Stabilisierung der Resonatorraumlänge vorgesehen werden.

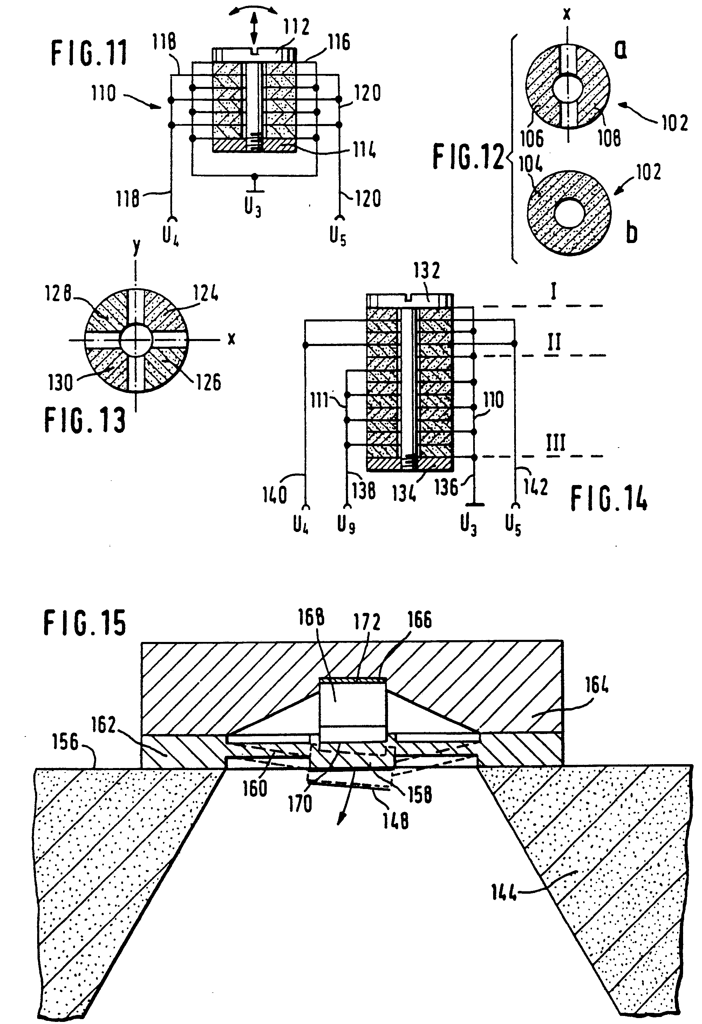

Ein Stellantrieb, der in der Lage ist, die vorgenannten Anforderungen zu erfüllen, ist in den Fig. 11 bis 16 dargestellt Der Stellantrieb ist aus vorzugsweise runden piezokeramischen Scheiben aufgebaut, bei denen das piezokeramische Material beidseitig mit Kontaktflächen versehen ist. Die Kontaktfläche auf der einen Seite ist eine durchgehende Kontaktfläche, während auf der gegenüberliegenden Seite die Kontaktfläche symmetrisch in elektrisch gegeneinander isolierte Kontaktsegmente aufgeteilt ist. Die Symmetrielinien bilden dabei die Kippachse des Stellantriebes.

Der Stellantrieb 110, der in Fig. 11 dargestellt ist, besteht aus einer Säule von piezokeramischen Scheiben 102, die auf einem als Schraube ausgebildeten Halteelement 112 angeordnet sind. Die Scheiben werden auf dem Halteelement 112 durch eine Mutter 114 gehalten.

Die Kontaktflächen 104, 106 und 108 sind jeweils mit gesonderten elektrischen Anschlüssen versehen. Die Anschlüsse 116 der durchgehenden Kontaktflächen sind parallel geschaltet und an ein gemeinsames Potential $U_3$ gelegt. Die Anschlüsse 118, die beispielsweise den Kontaktflächen 106 zugeordnet sind, sind an ein Potential $U_4$ und die Anschlüsse 120, die den Kontaktflächen 108 zugeordnet sind, an ein Potential $U_5$ angeschlossen. Die Symmetrielinie x der beiden Kontaktflächen 106, 108 liegt in Fig. 11 senkrecht zur Zeichenebene.

Die piezokeramischen Scheiben 102 sind so polarisiert, daß die Dehnungsrichtung und die Richtung des elektrischen Feldes parallel liegen (33-Betrieb). Das Potential $U_3$ kann ein Nullpotential sein. Wird nun an die Anschlüsse 118 und 120 eine gleich große positive Gleichspannung angelegt, dehnt sich die Säule aus den piezokeramischen Scheiben aus, wenn die in den Piezoscheiben eingeprägte Polarisation von gleicher Polarität ist wie die Spannung. Wird die Spannung an 118 und 120 negativ, zieht sich die Säule zusammen. Der Stellantrieb führt damit eine Translationsbewegung aus, wie in Fig. 11 durch den in Achsrichtung eingezeichneten Doppelpfeil angedeutet. Um Depolarisationseffekte zu vermeiden, sind bei den meisten bekannten Piezomaterialien Felder, die größer als 500 V/mm sind, zu vermeiden.

Werden die Spannungen $U_4$ und $U_5$ an den Anschlüssen 118 und 120 unsymmetrisch eingestellt, kommt es in dem Bereich der Kontaktsegmente 106 und 108 zu unterschiedlichen Dehnungen bzw. Kontraktionen. Damit erfährt der Stellantrieb nicht nur eine Translationsbewegung, sondern zusätzlich eine Kippbewegung der Deckplatte der Schraube 112, wie durch den gekrümmten Doppelpfeil in Fig. 11 angedeutet. In Abhängigkeit vom Verhältnis der beiden Steuerspannungen $U_4$ und $U_5$ lassen sich mit diesem Piezostellantrieb von der reinen Kippbewegung, wenn $U_4$ und $U_5$ gleich groß sind, aber entgegengesetztes Vorzeichen haben, bis zur reinen Translationsbewegung, wenn $U_4$ und $U_5$ nach Betrag und Vorzeichen gleich sind, alle Übergangsformen der Bewegung einstellen.

Eine Kippbewegung um wenigstens zwei Achsen läßt sich mit einer Ausführungsform der piezokeramischen Scheiben nach Fig. 13 erreichen. Bei der hier dargestellten Scheibe 122 ist die eine Seite wie bei der Ausführungsform nach Fig. 12 mit einer durchgehenden Kontaktfläche versehen. Auf der gegenüberliegenden Seite der Scheibe sind vier Kontaktsegmente 124, 126, 128 und 130 vorgesehen, die symmetrisch zu den beiden senkrecht aufeinander stehenden Symmetrieachsen x und y liegen. Jedes dieser vier Kontaktsegmente ist mit einem Anschluß versehen. Die vier Kontaktsegmente können dabei wahlweise an zwei Spannungspotentiale angeschlossen werden. Durch Zusammenschalten der Kontaktsegmente 124 und 126 einerseits und 128 und 130 andererseits lassen sich Kippbewegungen um die y-Achse durchführen und durch Zusammenschalten der Kontaktsegmente 124 und 128 einerseits und 126 und 130 andererseits Kippbewegungen um die x-Achse. Auf diese Weise lassen sich Kippbewegungen um zwei um 90° versetzte Achsen durchführen. Es ist weiter möglich, jeweils zwei gegenüberliegende Kontaktsegmente, nämlich 124 und 130 bzw. 126 und 128 an unterschiedliche Spannungspotentiale anzulegen. Auf diese Weise lassen sich dann Kippbewegungen um Kippachsen erreichen, die um 45° gegen die Achsen x und y versetzt liegen. Durch Anlegen aller vier Kontaktsegmente 124, 126, 128 und 130 an gleiches Spannungspotential wird eine Translationsbewegung erzeugt.

Eine abgewandelte Ausführungsform eines Stellantriebes ist in Fig. 14 dargestellt. Hier ist wiederum auf einer als Schraube ausgebildeten Halterung 132 ein Stapel von piezokeramischen Scheiben angeordnet, die durch eine Mutter 134 zusammengepreßt sind. Die Scheiben zwischen den gestrichelten Linien I und II sind hierbei entsprechend Fig. 12 bzw. Fig. 13 ausgebildet. Diese Scheiben erzeugen die Kippbewegungen. Zwischen den gestrichelten Linien II und III sind dagegen beidseitig voll kontaktierte piezokeramische Scheiben angeordnet, durch die eine Längenänderung durchgeführt wird. Alle durchgehenden Kontaktflächen auf einer Seite der piezokeramischen Scheiben in beiden Bereichen liegen an einem Anschluß 110, an dem ein Potential $U_3$ anliegt. Die gegenüberliegenden Kontaktflächen der piezokeramischen Scheiben im Bereich II-III liegen an einem Anschluß 111, an dem ein Potential $U_9$ anliegt. Die Kontaktflächen 106 und 108 der piezokeramischen Scheiben im Bereich I-II liegen jeweils an einem Anschluß 140 bzw. 142 mit den Potentialen $U_4$ und $U_5$. Zusätzlich ist es selbstverständlich möglich, auch Schaltmittel vorzusehen, um die beiden Anschlüsse 140 und 142 an den Anschluß 138 und damit auf das Potential $U_9$ zu legen und so die gesamte Säule von piezokeramischen Scheiben zur Durchführung der Längenänderung zu benutzen, wenn bei kleinen gewünschten Kippbewegungen große Längenbewegungen bei kleinstmöglicher Baulänge des Stellantriebes durchgeführt werden sollen.

In Fig. 15 ist ein Eckspiegel 148 eines Laserkreisel mit einem Verstellelement 168 dargestellt, das in der oben beschriebenen Weise ausgebildet ist. Der Trägerblock 144 ist hier mit einer angeschliffenen Auflagefläche 156 vorgesehen, auf der der Spiegel 148 aufliegt. Der Spiegel 148 weist den Spiegelträger 158 auf, der in einer Membran 160 angeordnet ist, die aus einem Stück mit ihm und einem äußeren Rahmen 162 ausgebildet ist, der an der Fläche 156 anliegt. In einer Abdeckscheibe 164 ist eine Aufnahme 166 für das Verstellelement 168 ausgebildet, das mit einem Ende in einer Ausnehmung 170 auf der Rückseite des Spiegelträgers eingreift. Das Verstellelement wird über Distanzscheiben 172 unter Vorspannung in Anlage gegen die Rückseite des Spiegelträgers 158 gehalten. Bei entsprechender Vorspannung werden die Kipp- und Translationsbewegungen des Verstellelementes hochgenau auf den Spiegelträger übertragen. Wegen des relativ hohen Antriebsmomentes, das über das Verstellelement aufbringbar ist, kann die Spiegelmembran 160 relativ steif ausgeführt werden. Der Spiegel kann damit gegen Translations- und Rotationsbeschleunigungen unempfindlich ausgebildet werden. Dies ist für Laserkreisel, die zur Umgehung des Lock-in-Problems in Drehschwingungen versetzt werden müssen, ein erheblicher Vorteil.

Mit dem beschriebenen Stellantrieb ist es möglich, für die Konstanthaltung des Strahlungsweges einen relativ großen Hub zur Verfügung zu stellen. Darüber hinaus werden die Kippbewegungen der Eckspiegel um deren in der Strahlenebene liegende horizontale bzw. senkrecht dazu stehende Achsen, mit hoher Präzision durchgeführt. Im allgemeinen sind Kippwinkel von 1 bis 2" zur Kompensation thermischer oder mechanischer Verspannungen des Trägerblocks 44 ausreichend. Dieses Anforderungsprofil wird in hervorragender Weise von den beschriebenen Verstellelementen erfüllt.

Grundsätzlich ist auch die Verwendung einer einzigen Fotodiode möglich, die so angeordnet ist, daß sie bei einer Strahlverlagerung variabel vom Strahl getroffen wird und so ein von der Strahllage abhängiges Ausgangssignal abgibt, aus dem das Stellsignal für den Stellantrieb abgeleitet wird, über den der betreffende Spiegel gekippt wird.

**Patentansprüche**

1. Ringlaser, insbesondere für Ringlaserkreisel, mit einem Trägerblock aus einer thermisch und mechanisch hochstabilen Glaskeramik mit drei Eckspiegeln, von denen wenigstens einer über einen Stellantrieb um eine Achse kippbar ist, einem teildurchlässigen Auskopplungsspiegel, hinter dem ein Fotodetektor im Strahlengang des ausgekoppelten Strahlanteiles eines der umlaufenden Wellenzüge angeordnet ist, und mit einer Schaltung, von der in Abhängigkeit vom Ausgangssignal des Fotodetektors dem Stellantrieb für den kippbaren Spiegel ein Stellsignal zugeführt wird, dadurch gekennzeichnet, daß als Fotodetektor wenigstens eine Fotodiode vorgesehen ist, die so angeordnet ist, daß sie ein der Strahllage proportionales Signal abgibt, in Abhängigkeit von dem ein Stellsignal für den Stellantrieb des kippbaren Spiegels gebildet wird.

2. Ringlaser nach Anspruch 1, dadurch gekennzeichnet, daß als Fotodetektor in der Strahlebene nebeneinander und/oder übereinander zwei Fotodioden vorgesehen sind, die jeweils ein von der Position des sie beaufschlagenden Strahlanteils in der Größe abhängiges Signal abgeben, daß die von den beiden Fotodioden abgegebenen Signale subtrahiert und ein dem Differenzsignal proportionales Stellsignal für den Stellantrieb des kippbaren Spiegels gebildet wird.

3. Ringlaser nach Anspruch 2, dadurch gekennzeichnet, daß eine Differentialfotodiode vorgesehen ist, deren Mittelpunkt im Strahlengang des ausgekoppelten Strahlanteils bei optimiertem Strahlumlauf im Ringlaser liegt.

4. Ringlaser nach Anspruch 1, dadurch gekennzeichnet, daß einer der Eckspiegel um die zur Ebene des Strahlenganges vertikale Achse kippbar ist.

5. Ringlaser nach Anspruch 1, dadurch gekennzeichnet, daß ein Eckspiegel um eine in der Ebene des Strahlenganges liegende horizontale Achse kippbar ist.

6. Ringlaser nach einem der vorhergehenden Ansprüche, dadurch gekennzeichnet, daß ein Eckspiegel parallel verschiebbar ist.

7. Ringlaser nach Anspruch 2, dadurch gekennzeichnet, daß eine 4-Quadranten Differentialfotodiode vorgesehen ist.

8. Ringlaser nach einem der vorhergehenden Ansprüche, dadurch gekennzeichnet, daß als Stellantrieb für die kippbaren Spiegel eine Mehrzahl zu einer Säule zusammengefaßter Piezoscheiben vorgesehen sind, die so polarisiert sind, daß die Dehnungsrichtung und die Richtung des elektrischen Feldes parallel liegen, und daß eine der Kontaktflächen wenigstens einer der Piezoscheiben symmetrisch in elektrisch voneinander getrennte Kontaktsegmente aufgeteilt ist und die Kontaktsegmente mit gesonderten elektrischen Anschlüssen versehen sind.

9. Ringlaser nach Anspruch 8, dadurch gekennzeichnet, daß vier symmetrische Kontaktsegmente vorgesehen sind.

10. Ringlaser nach Anspruch 8 oder 9, dadurch gekennzeichnet, daß die Säule unter Vorspannung zwischen einem festen Widerlager und der Rückseite des zu verstellenden Spiegels so angeordnet ist, daß die Kontaktsegmente symmetrisch zur Kippachse liegen.

## Claims

1. A ring laser, especially for a ring laser type of gyro, comprising a block made of a thermally and mechanically highly-stable ceramic glass with three corner mirrors of which at least one is mounted for tilting about an axis via a servo-drive, a semi-transparent separating mirror, behind which a photo-detector is arranged in the beam path of the separated beam portion of one of the rotating wave trains, and a control by which an adjustment signal is transmitted to said servo-drive for said tiltable mirror as a function of an output signal from said photo-detector, characterised in that as said photo-detector is provided at least one photo-diode arranged in such a way that it provides an output signal proportional to the position of the beam, as a function of which an adjustment signal is formed for said servo-drive of said tiltable mirror.

2. A ring laser according to Claim 1, characterised in that as photo-detector two photo-diodes positioned adjacent or above one another are provided in the beam plane, each said photo-diode providing an output signal dependent on the position of the beam portion it receives, that the signals provided by the two photo-diodes are subtracted and a signal which is proportional to the differential signal is formed for said servo-drive of said tiltable mirror.

3. A ring laser according to Claim 2, characterised in that a differential photo-diode is provided, the centre point of which lies in the beam path of the separated beam portion in the case of optimised beam rotation in the ring laser.

4. A ring laser according to Claim 1, characterised in that one of the corner mirrors is tiltable about a vertical axis perpendicular to the plane of the beam path.

5. A ring laser according to Claim 1, characterised in that one corner mirror is tiltable about a horizontal axis lying in the plane of the beam path.

6. A ring laser according to one of the preceding claims, characterised in that one corner mirror can undergo parallel displacement.

7. A ring laser according to Claim 2, characterised in that a four quadrant differential photo-diode is provided.

8. A ring laser according to one of the preceding claims, characterised in that as servo-drive for said tiltable mirrors is provided a plurality of piezo disks arranged in a column, said disks being polarised in such a way that the direction of extension of said column and the direction of the electrical field are parallel, and that one of the contact surfaces of at least one of the piezo disks is divided symmetrically into electrically separate contact segments and the contact segments are provided with separate electrical connections.

9. A ring laser according to Claim 8, characterised in that four symmetrical contact segments are provided.

10. A ring laser according to Claim 8 or 9, characterised in that said column of piezo disks is supported initially in compression between a support and the back surface of the tiltable mirror in such a way that said contact segments are symmetrical about the axis of tilt of said mirror.

## Revendications

1. Laser en anneau, en particulier pour gyroscope à laser en anneau, comportant un bloc support en céramique à haute stabilité thermique et mécanique avec trois miroirs d'angle, dont au moins un peut osciller autour d'un axe par l'intermédiaire d'un entraînement de réglage, un miroir de découplage semi-transparent, en aval duquel est disposé un photodétecteur sur la trajectoire de la partie de rayon découplée d'un des trains d'onde circulant, et un circuit par lequel un signal de réglage est appliqué en fonction du signal de sortie du photodétecteur à l'entraînement de réglage pour le miroir oscillant, caractérisé en ce qu'en tant que photodétecteur est prévue au moins une photodiode qui est disposée de sorte qu'elle délivre un signal proportionnel à la position du rayon, en fonction duquel est formé un signal de réglage pour l'entraînement de réglage du miroir oscillant.

2. Laser en anneau selon la revendication 1, caractérisé en ce qu'en tant que photodétecteur dans le plan du rayon sont prévues deux photodiodes juxtaposées et/ou superposées, qui délivrent chacune un signal fonction en amplitude de la position de la partie de rayon la frappant, en ce que les signaux délivrés par les deux photodiodes sont retranchés et un signal de réglage proportionnel au signal de différence est formé pour l'entraînement de réglage du miroir oscillant.

3. Laser en anneau selon la revendication 2, caractérisé en ce qu'une photodiode différentielle est prévue, dont le centre se trouve dans la trajectoire de la partie de rayon découplée dans le cas de la circulation optimale du rayon dans le laser en anneau.

4. Laser en anneau selon la revendication 1, caractérisé en ce qu'un des miroirs d'angle peut osciller autour de l'axe vertical par rapport au plan de la trajectoire du rayon.

5 Laser en anneau selon la revendication 1, caractérisé en ce qu'un miroir d'angle peut osciller autour d'un axe horizontal se trouvant dans le plan de la trajectoire du rayon.

6. Laser en anneau selon une des revendications précédentes, caractérisé en ce qu'un miroir d'angle peut être déplacé parallèlement.

7. Laser en anneau selon la revendication 2, caractérisé en ce qu'une photodiode différentielle à 4 quadrants est prévue.

8. Laser en anneau selon une des revendications précédentes, caractérisé en ce qu'en tant qu'entraînement de réglage pour le miroir oscillant sont prévus un ensemble de disques piézoélectriques empilés en une colonne qui sont polarisés de sorte que la direction d'allongement et la direction du champ électrique sont parallèles, et en ce qu'une des surfaces de contact d'au moins un des disques piézoélectriques est partagée symétriquement en segments de contact séparés électriquement les uns des autres et les segments de contact sont munis de connexions électriques particulières.

9. Laser en anneau selon la revendication 8, caractérisé en ce que quatre segments de contact symétriques sont prévus.

10. Laser en anneau selon la revéndication 8 ou 9, caractérisé en ce que la colonne est disposée avec précontrainte entre une butée fixe et le verso du miroir à déplacer de sorte que les segments de contact se trouvent symétriques par raport à l'axe d'oscillation.

0 157 319

FIG.1

FIG.2

FIG.3

FIG.4

FIG.5

1

FIG.6

FIG.7

FIG.8

FIG.9

FIG. 10

FIG.11

FIG.12

FIG.13

FIG.14

FIG.15